# FASCICULE DE BREVET EUROPEEN

(11) **EP 2 441 937 B1**
(45) Date de publication et mention de la délivrance du brevet: **16.05.2018**
(21) Numéro de dépôt: 11185385.9
(22) Date de dépôt: 17.10.2011
(51) Int. Cl.: F02C 7/22, F02C 9/40, F23K 5/18

(54) **Dispositif et procédé de purge pour système d'injection de carburant liquide dans une turbine à gaz**
Vorrichtung und Verfahren zur Spülung eines Einspritzsystem für flüssigen Kraftstoff einer Gasturbine.
Apparatus and method for purging a liquid fuel injection system in a gas turbine.

(30) Priorité: 18.10.2010 FR 1058473
(43) Date de publication de la demande: 18.04.2012
(73) Titulaire: GE Energy Products France SNC, 90000 Belfort (FR)
(72) Inventeur: Montagne, Pierre, 54690 Lay Saint Christophe (FR); Deloge, Daniel, 90000 Belfort (FR); Picard, Alexandre, 90300 Offemont (FR); Chapuis, Olivier, 90800 Bavilliers (FR); Gartner, Benoît, 68250 Rouffach (FR)
(74) Mandataire: Delprat, Olivier

(56) Documents cités:
- EP-A2- 0 949 454
- US-A1- 2001 004 828

## Description

L'invention concerne les turbines à gaz et, plus particulièrement, les systèmes d'injection de combustible liquide pour les turbines à gaz industrielles.

En particulier, la présente invention concerne un dispositif de purge des systèmes d'injection de combustible dans les turbines à gaz.

Les turbines à gaz comprennent généralement un système d'admission d'air, un compresseur à un ou plusieurs étages de compression avec un dispositif de régulation de débit d'air, un système de combustion interne, une turbine de détente reliée mécaniquement au compresseur, et un système pour le rejet des gaz d'échappement. Les turbines à gaz sont conçues avec des systèmes de combustion capables d'injecter du combustible liquide et/ou du combustible gazeux dans le système de combustion, par l'intermédiaire, par exemple, d'injecteurs concentriques. Toutefois, certaines turbines à gaz sont capables de fonctionner alternativement avec du combustible liquide et du combustible gazeux tel que, par exemple, du gaz naturel. Généralement, les turbines à gaz brûlent alternativement chacun des combustibles liquide et gazeux. Ainsi, lorsque la turbine à gaz brûle un combustible liquide, l'alimentation en combustible gazeux est coupée et lorsque la turbine à gaz brûle un combustible gazeux, l'alimentation en combustible liquide est coupée. Lors du transfert du combustible liquide au combustible gazeux, la pression dans le circuit du combustible liquide diminue progressivement, alors que la pression dans le circuit du combustible gazeux augmente progressivement. Ce type de turbines à gaz nécessite un système de purge annexé au système d'injection du combustible liquide, afin d'éliminer le combustible liquide présent dans les injecteurs des chambres de combustion et aussi assurer un courant d'air de refroidissement continu aux injecteurs. Le système de purge est généralement mis en marche lorsque le système d'alimentation en combustible liquide démarre ou est arrêté. En effet, il est nécessaire de purger le circuit d'alimentation en combustible liquide afin d'éviter que du combustible liquide ne reste dans une zone à haute température, proche de la chambre de combustion, pouvant entraîner la cokéfaction du combustible liquide, c'est-à-dire la solidification du liquide à l'intérieur du circuit d'alimentation et de ce fait la dégradation progressive du fonctionnement de la turbine à gaz, le blocage des vannes, des tuyauteries, des clapets.

Une solution afin de purger le combustible liquide est d'utiliser de l'air comprimé ou un liquide.

On pourra à cet égard, se référer au document EP 0 949 454 qui comporte un système de purge complexe comprenant une vanne d'alimentation en air de purge associée à une vanne de purges douces, un clapet anti-retour et une vanne de purge à plusieurs orifices dirigeant l'air de purge vers les injecteurs. Toutefois, ce type de système de purge s'avère complexe.

On pourra également se référer au document US 6 438 963 qui décrit un système de purge comprenant une vanne à trois voies afin de diminuer la quantité de combustible liquide résiduel et d'éviter efficacement le retour de gaz de combustion dans le circuit d'alimentation en combustible liquide et dans le circuit de purge.

Toutefois, la pression de l'air de purge étant difficilement réglable, l'utilisation d'air comprimé entraîne des purges soudaines du combustible liquide vers la chambre de combustion, provoquant une augmentation soudaine de la puissance de la turbine à gaz.

Afin de palier à cet inconvénient, l'état de l'art propose de rallonger le temps de purge. Toutefois, rallonger la période de purge impose que le débit de combustible liquide résiduel soit constant lors de la purge, ce qui est rarement le cas. De plus, une telle solution nécessite un système de contrôle de la purge très complexe et difficile à implanter.

Le but de la présente invention est de proposer un système de purge efficace et robuste, tout en évitant la propagation de fuites de combustible dans le circuit de purge.

Un autre but de l'invention est de contrôler efficacement la purge du circuit d'alimentation en combustible liquide et d'assurer de bonnes conditions de pression et de débit d'air lors de la purge afin de permettre de rallonger le temps de purge, tout en étant facile à implanter.

Selon un aspect, il est proposé une turbine à gaz comprenant une chambre de combustion apte à être alimentée alternativement en combustible gazeux et liquide, un dispositif d'alimentation en combustible liquide et un dispositif de purge dudit dispositif d'alimentation comprenant un circuit d'air de purge comportant un collecteur apte à distribuer l'air dans la chambre de combustion, et un premier moyen de régulation de la pression de l'air dans le circuit de purge et un deuxième moyen de régulation de pression situé entre le premier moyen de régulation et le collecteur.

Le dispositif de purge comprend des moyens de mesure de la pression dans le circuit de purge et dans la chambre de combustion, un premier moyen de mesure étant situé entre le premier moyen de régulation de pression et le collecteur, et un deuxième moyen de mesure étant situé dans la chambre à combustion en aval d'un injecteur.

Le dispositif de purge comprend en outre une unité de contrôle électronique apte à recevoir la valeur de pression inter-vanne fournie par le premier moyen de mesure et la valeur de pression dans la chambre de combustion fournie par le deuxième moyen de mesure et configurée pour rallonger le temps de purge en contrôlant l'ouverture et la fermeture du premier et deuxième moyen de régulation en fonction de la pression mesurée dans le circuit de purge et dans la chambre de combustion.

Ainsi, la période de purge est rallongée tout en assurant les bonnes conditions de pression et de débit d'air lors de la purge quelque soit le mode de fonctionnement de la turbine à gaz.

Le deuxième moyen de régulation permet à la fois d'évacuer les éventuelles fuites de combustible dans le circuit de purge et de réguler la pression de l'air dans le collecteur d'admission.

Le dispositif de purge peut comprendre une vanne d'isolation d'air montée en aval du collecteur et une vanne d'isolation de combustible montée entre le circuit d'alimentation en combustible liquide et la vanne d'isolation d'air.

En outre, le premier moyen de régulation de pression est apte à s'actionner lors de la fermeture ou de l'ouverture de la vanne d'isolation de combustible.

Avantageusement, le dispositif de purge comprend des moyens de mesure de la pression dans le circuit de purge et dans la chambre de combustion, un premier moyen de mesure étant situé entre le premier moyen de régulation de pression et le collecteur, et un deuxième moyen de mesure étant situé dans la chambre à combustion en aval d'un injecteur.

Le dispositif de purge peut comprendre un orifice situé en aval du deuxième moyen de régulation de pression, de manière à limiter le débit de fuite lors de l'ouverture du premier moyen de régulation de pression.

Selon un autre aspect, l'invention concerne un procédé de purge d'un dispositif d'alimentation en combustible liquide d'une turbine à gaz comprenant une chambre de combustion apte à être alimentée alternativement en combustible gazeux et liquide, ledit dispositif comprenant un circuit d'air de purge comportant un collecteur apte à distribuer l'air dans la chambre de combustion, un premier moyen de régulation de la pression de l'air dans le circuit d'air de purge et un deuxième moyen de régulation de pression situé entre le premier moyen de régulation et le collecteur. On contrôle l'ouverture et la fermeture du premier et deuxième moyen de régulation en fonction de la pression inter-vanne mesurée dans le circuit d'air de purge entre le premier moyen de régulation de pression et le collecteur, et de la pression mesurée dans la chambre de combustion, en aval d'un injecteur.

Avantageusement, on commande le premier moyen de régulation et un deuxième moyen de régulation de pression situé entre le premier moyen de régulation et le collecteur, en fonction de la pression mesurée dans le circuit de purge et dans la chambre de combustion.

Lorsque l'alimentation en combustible liquide est fermée ou en cours de fermeture, on ouvre le premier moyen de régulation afin d'alimenter le collecteur en air de purge et l'on ouvre une vanne d'isolation d'air permettant de distribuer l'air du collecteur dans la chambre de combustion.

D'autres avantages et caractéristiques de l'invention apparaîtront à l'examen de la description détaillée d'un mode de réalisation de l'invention nullement limitatif, et des dessins annexés, sur lesquels :
- la figure 1 représente, de manière schématique, une turbine à gaz ; et
- la figure 2 illustre, de manière schématique, un dispositif d'alimentation en combustible liquide selon la figure 1.

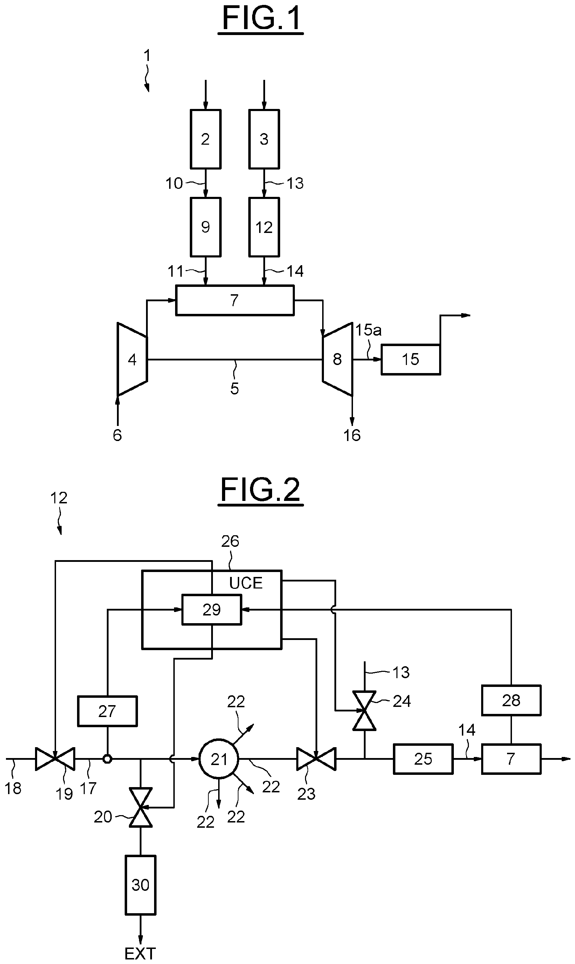

La figure 1 représente, de manière schématique, une turbine à gaz 1 alimentée alternativement par un combustible liquide et par un combustible gazeux tel que, par exemple, du gaz naturel, provenant respectivement d'un réservoir 2 et 3. Les turbines à gaz sont généralement utilisées dans des centrales électriques, pour entraîner des générateurs et produire de l'énergie électrique ou pour un asservissement mécanique (compresseur, station de pompage, etc...). La turbine à gaz 1 comprend un compresseur axial 4 comportant un arbre de rotor 5. L'air est introduit par l'entrée 6 du compresseur 4, et comprimé par le compresseur axial 4 puis dirigé vers une chambre de combustion 7. La chambre de combustion 7, également alimentée en combustible gazeux et liquide, produit, lors de la combustion, des gaz chauds à haute énergie aptes à entraîner une turbine 8. Du combustible gazeux peut être acheminé du réservoir 2 à la chambre de combustion 7 par un dispositif d'alimentation en combustible gazeux 9 qui comprend une entrée 10 reliée au réservoir 2 et une sortie 11 reliée à la chambre de combustion 7. De même, du combustible liquide peut être acheminé du réservoir 3 à la chambre de combustion 7 par un dispositif d'alimentation en combustible liquide 12 qui comprend une entrée 13 reliée au réservoir 3 et une sortie 14 reliée à la chambre de combustion 7.

Dans la turbine 8, l'énergie des gaz chauds est convertie en travail dont une partie est utilisée pour entraîner le compresseur 4, par l'intermédiaire de l'arbre du rotor 5, et dont l'autre partie est utilisée pour entraîner un générateur 15 de production d'électricité, par l'intermédiaire d'un arbre 15a. Les gaz d'échappement sortent ensuite de la turbine 8 par une sortie 16, et peuvent être utilisés pour d'autres applications.

La figure 2 représente, de manière plus détaillée, le dispositif d'alimentation 12 en combustible liquide de la chambre de combustion 7. Le dispositif d'alimentation 12 comprend une entrée 13 pour recevoir du combustible liquide provenant du réservoir 3, des sorties 14 pour alimenter la chambre de combustion 7 avec le combustible liquide, et un circuit de purge 17 reliant une entrée 18 de réception de l'air de purge aux sorties 14 et à l'entrée du combustible 13. La ligne d'acheminement 17 de l'air de purge comprend successivement, dans le sens de circulation de l'air : une vanne principale 19 et une vanne de dépression 20 reliées respectivement à l'entrée 18 et à l'atmosphère extérieure EXT ; un collecteur d'admission 21 ; et des lignes d'alimentation 22 montées en aval du collecteur d'admission 21 et comprenant chacune une vanne d'isolation 23 montée en amont d'une sortie 14 vers la chambre de combustion 7. Le circuit d'alimentation en combustible liquide 13 comportant une vanne d'isolation 24 est raccordé entre la vanne d'isolation 23 et un injecteur 25.

Dans l'exemple illustré, une seule ligne d'alimentation 22 est représentée. On notera que le dispositif pourrait, à titre d'exemple non limitatif, comporter un nombre de ligne d'alimentation supérieur ou égal à un, selon le nombre de chambre de combustion de la turbine.

La vanne principale 19 permet d'alimenter en air le collecteur d'admission 21 lorsque du combustible liquide n'est pas injecté dans la chambre de combustion 7 et d'interrompre l'alimentation en air de purge lorsque du combustible liquide est injecté dans la chambre de combustion 7. Cette vanne 19 permet également de réguler la pression de l'air de purge afin d'obtenir une purge contrôlée.

La vanne de dépression 20 permet de purger la ligne d'acheminement 17 et le collecteur d'admission 21 des éventuelles fuites de la vanne d'isolation 23 lorsque la turbine est alimentée en combustible liquide ou gazeux et que la vanne d'isolation 23 est fermée et de réguler la pression dans le collecteur d'admission 21.

La vanne d'isolation 23 permet d'interrompre l'alimentation en air de purge lorsque du combustible liquide est injecté dans la chambre de combustion 7.

La vanne d'isolation 24 détermine la quantité de combustible liquide délivrée aux injecteurs 25 et permet d'interrompre l'alimentation des injecteurs 25 en combustible liquide.

Le dispositif d'alimentation en combustible liquide 12 vise à déterminer et à contrôler la quantité de combustible liquide délivrée à la chambre de combustion 7 afin, notamment, de permettre à la turbine à gaz 1 de fonctionner dans des conditions dans lesquelles elle présente un rendement élevé, et un vieillissement limité. De plus, le dispositif d'alimentation 12 comprend un dispositif de purge 17 permettant de purger le combustible liquide présent dans les injecteurs 25 lorsque la turbine 1 n'est plus alimentée en combustible liquide et ainsi d'éviter la formation de coke.

Ainsi, lors des changements de combustibles d'alimentation, il est important d'éviter la présence de combustible liquide résiduel dans le système d'injection 25.

Le dispositif d'alimentation 12 comprend, à cet effet, une unité de contrôle électronique 26. L'unité de contrôle 26 permet d'une part de déterminer la quantité de combustible à délivrer à la chambre de combustion 7, et de contrôler les vannes 19, 20, 23, et 24, par exemple leur ouverture et fermeture, ou bien encore leur degré d'ouverture. Pour déterminer la commande de la vanne 19, l'unité de contrôle 26 reçoit des informations relatives à la pression inter-vanne fournie par un capteur 27 et la pression dans la chambre de combustion fournie par un capteur 28 situé après les injecteurs 25. Ces informations de pression sont ensuite collectées par un moyen de commande 29 qui détermine le ratio de pression de purge et commande en fonction de ce ratio, la position de la vanne principale 19.

Généralement, lorsque du combustible liquide s'écoule vers le système de combustion 7 de la turbine à gaz 1, le système de purge de combustible est au repos et la vanne d'isolation 23 empêche le reflux de combustible dans le circuit de purge 17. Toutefois lors du changement de source de combustible, l'ouverture de la vanne 19 peut être déclenchée avant la fermeture totale de la vanne d'isolation 24.

Ainsi, lors de l'alimentation en combustible liquide de la turbine à gaz 1, la vanne d'isolation 23 est fermée et la vanne d'isolation 24 est ouverte afin d'alimenter la turbine à gaz 1 en combustible liquide, et lorsque la turbine à gaz 1 n'est plus alimentée en combustible liquide, la vanne d'isolation 23 est ouverte et la vanne d'isolation 24 est fermée afin d'assurer l'évacuation de fuites.

La vanne de dépression 20 peut être ouverte ou fermée indépendamment de la position des vannes 19, 23, et 24 afin de permettre à d'éventuelles fuites d'air de purge ou de combustible de sortir de la turbine à gaz 1.

De même, la vanne principale 19 peut être ouverte ou fermée indépendamment de la position des vannes 20, 23, et 24 afin d'assurer soit la purge vers la chambre de combustion 7 ou vers l'EXT, soit le refroidissement des injecteurs 25.

Un orifice 30, par exemple d'étranglement, peut être monté en aval de la vanne de dépression 20 afin de limiter les fuites d'air de purge lorsque la vanne principale 19 est ouverte.

Grâce à l'invention qui vient d'être décrite, on obtient un dispositif et procédé de purge du circuit d'alimentation en combustible liquide efficace et robuste et permettant de rallonger le temps de purge tout en assurant efficacement de bonnes conditions de pression et de débit d'air lors de la purge. De plus, un tel dispositif permet évitant d'éviter efficacement la propagation de fuites de combustible dans le circuit de purge.

## Revendications

1. Turbine à gaz (1) comprenant une chambre de combustion (7) apte à être alimentée alternativement en combustible gazeux et liquide, un dispositif d'alimentation (12) en combustible liquide et un dispositif de purge dudit dispositif d'alimentation comprenant un circuit d'air de purge (17) comportant un collecteur (21) apte à distribuer l'air dans la chambre de combustion (7), et un premier moyen de régulation (19) de la pression de l'air dans le circuit de purge (17) et un deuxième moyen de régulation de pression (20) situé entre le premier moyen de régulation (19) et le collecteur (21), **caractérisé en ce que** le dispositif de purge comprend des moyens de mesure (27, 28) de la pression dans le circuit de purge et dans la chambre de combustion, un premier moyen de mesure (27) étant situé entre le premier moyen de régulation de pression (19) et le collecteur (21), et un deuxième moyen de mesure (28) étant situé dans la chambre à combustion (7) en aval d'un injecteur (25) et **en ce que** le dispositif de purge comprend une unité de contrôle électronique (26) apte à recevoir la valeur de pression inter-vanne fournie par le premier moyen de mesure (27) et la valeur de pression dans la chambre de combustion fournie par le deuxième moyen de mesure (28) et configurée pour rallonger le temps de purge en contrôlant l'ouverture et la fermeture du premier et deuxième moyen de régulation (19, 20) en fonction de la pression mesurée dans le circuit de purge (17) et dans la chambre de combustion (7).

2. Turbine selon la revendication 1, dans laquelle le dispositif de purge comprend une vanne d'isolation d'air (23) montée en aval du collecteur (21) et une vanne d'isolation de combustible (24) montée entre le circuit d'alimentation en combustible liquide (13) et la vanne d'isolation d'air (23).

3. Turbine selon la revendication 2, dans laquelle le premier moyen de régulation (19) de pression est apte à s'actionner lors de la fermeture ou de l'ouverture de la vanne d'isolation de combustible (24).

4. Turbine selon l'une quelconque des revendications 1 à 3, dans laquelle le dispositif de purge comprend un orifice (30) situé en aval du deuxième moyen de régulation (20) de pression, de manière à limiter le débit de fuite d'air lors de l'ouverture du premier moyen de régulation (19) de pression.

5. Procédé de purge d'un dispositif d'alimentation en combustible liquide (12) d'une turbine à gaz (1) comprenant une chambre de combustion (7) apte à être alimentée alternativement en combustible gazeux et liquide, ledit dispositif comprenant un circuit d'air de purge (17) comportant un collecteur (21) apte à distribuer l'air dans la chambre de combustion (7), et un premier moyen de régulation (19) de la pression de l'air dans le circuit d'air de purge (17) et un deuxième moyen de régulation de pression (20) situé entre le premier moyen de régulation (19) et le collecteur (21), **caractérisé en ce qu'**on contrôle l'ouverture et la fermeture du premier et deuxième moyen de régulation (19, 20) en fonction de la pression inter-vanne mesurée dans le circuit d'air de purge (17) entre le premier moyen de régulation de pression (19) et le collecteur (21), et de la pression mesurée dans la chambre de combustion (7), en aval d'un injecteur (25).

6. Procédé de purge selon la revendication 5, **caractérisé en ce que** lorsque l'alimentation en combustible liquide (12) est fermée ou en cours de fermeture, on ouvre le premier moyen de régulation (19) afin d'alimenter le collecteur (21) en air de purge et l'on ouvre une vanne d'isolation d'air (23) permettant de distribuer l'air du collecteur (21) dans la chambre de combustion (7).

## Patentansprüche

1. Gasturbine (1), umfassend eine Brennkammer (7), die geeignet ist, alternativ mit gasförmigem und flüssigem Brennstoff versorgt zu werden, eine Versorgungsvorrichtung (12) mit flüssigem Brennstoff und eine Vorrichtung zur Spülung der Versorgungsvorrichtung, umfassend einen Spülluftkreislauf (17), umfassend einen Kollektor (21), der geeignet ist, die Luft in der Brennkammer (7) zu verteilen, und ein erstes Mittel (19) zur Regelung des Drucks der Luft in dem Spülkreislauf (17) und ein zweites Druckregelmittel (20), das zwischen dem ersten Regelmittel (19) und dem Kollektor (21) angeordnet ist, **dadurch gekennzeichnet, dass** die Spülvorrichtung Mittel (27, 28) zum Messen des Drucks in dem Spülkreislauf und in der Brennkammer umfasst, wobei ein erstes Messhilfsmittel (27) zwischen dem ersten Druckregelmittel (19) und dem Kollektor (21) angeordnet ist, und ein zweites Messhilfsmittel (28) in der Brennkammer (7) stromabwärts zu einem Einspritzsystem (25) angeordnet ist, und dass die Spülvorrichtung eine elektronische Kontrolleinheit (26) umfasst, die geeignet ist, den von dem ersten Messhilfsmittel (27) gelieferten Wert eines Zwischenventildrucks und den Druckwert in der Brennkammer, der von dem zweiten Messhilfsmittel (28) geliefert wird, zu empfangen, und die ausgeführt ist, um die Spülzeit zu verlängern, wobei das Öffnen und Schließen des ersten und zweiten Regelmittels (19, 20) in Abhängigkeit von dem in dem Spülkreislauf (17) und in der Brennkammer (7) gemessenen Druck kontrolliert wird.

2. Turbine nach Anspruch 1, bei der die Spülvorrichtung ein Luftabsperrventil (23), das stromabwärts zu dem Kollektor (21) montiert ist, und ein Brennstoffsperrventil (24), das zwischen der Versorgungsschaltung mit flüssigem Brennstoff (13) und dem Luftabsperrventil (23) angeordnet ist, umfasst.

3. Turbine nach Anspruch 2, bei der das erste Druckregelmittel (19) geeignet ist, beim Schließen oder Öffnen des Brennstoffsperrventils (24) tätigt zu werden.

4. Turbine nach einem der Ansprüche 1 bis 3, bei der die Spülvorrichtung eine Öffnung (30) umfasst, die sich stromabwärts zu dem zweiten Druckregelmittel (20) befindet, um die Luftleckagemenge beim Öffnen des ersten Druckregelmittels (19) zu begrenzen.

5. Verfahren zur Spülung einer Vorrichtung zur Versorgung einer Gasturbine (1) mit flüssigem Brennstoff (12), umfassend eine Brennkammer (7), die geeignet ist, alternativ mit gasförmigem und flüssigem Brennstoff versorgt zu werden, wobei die Vorrichtung einen Spülluftkreislauf (17), umfassend einen Kollektor (21), der geeignet ist, die Luft in der Brennkammer (7) zu verteilen, und ein erstes Mittel (19) zur Regelung des Drucks der Luft in dem Spülkreislauf (17) und ein zweites Druckregelmittel (20), das zwischen dem ersten Regelmittel (19) und dem Kollektor (21) angeordnet ist, umfasst, **dadurch gekennzeichnet, dass** das Öffnen und das Schließen des ersten und zweiten Regelmittels (19, 20) in Abhängigkeit von dem gemessenen Zwischenventildruck in dem Spülluftkreislauf (17) zwischen dem ersten Druckregelmittel (19) und dem Kollektor (21) und dem in der Brennkammer (7) stromabwärts zu einem Einspritzsystem (25) gemessenen Druck kontrolliert wird.

6. Spülverfahren nach Anspruch 5, **dadurch gekennzeichnet, dass**, wenn die Versorgung mit flüssigem Brennstoff (12) geschlossen ist oder gerade geschlossen wird, das erste Regelmittel (19) geöffnet wird, um den Kollektor (21) mit Spülluft zu versorgen, und ein Luftabsperrventil (23) geöffnet wird, das es ermöglicht, die Luft des Kollektors (21) in der Brennkammer (7) zu verteilen.

## Claims

1. Gas turbine (1) comprising a combustion chamber (7) capable of being supplied alternately with gaseous and liquid fuel, a liquid fuel supply device (12) and a device for purging said supply device comprising a purging air circuit (17) comprising a manifold (21) capable of distributing the air in the combustion chamber (7), and a first means (19) for regulating the pressure of the air in the purging circuit (17) and a second pressure regulation means (20) situated between the first regulation means (19) and the manifold (21), **characterized in that** the purging device comprises means (27, 28) for measuring the pressure in the purging circuit and in the combustion chamber, a first measurement means (27) being situated between the first pressure regulation means (19) and the manifold (21), and a second measurement means (28) being situated in the combustion chamber (7) downstream of an injector (25) and **in that** the purging device comprises an electronic control unit (26) capable of receiving the inter-valve pressure value supplied by the first measurement means (27) and the pressure value in the combustion chamber supplied by the second measurement means (28) and configured to extend the purging time by controlling the opening and the closing of the first and second regulation means (19, 20) as a function of the pressure measured in the purging circuit (17) and in the combustion chamber (7).

2. Turbine according to Claim 1, in which the purging device comprises an air shut-off valve (23) mounted downstream of the manifold (21) and a fuel shut-off valve (24) mounted between the liquid fuel supply circuit (13) and the air shut-off valve (23).

3. Turbine according to Claim 2, in which the first pressure regulation means (19) is capable of being actuated upon the closing or the opening of the fuel shut-off valve (24).

4. Turbine according to any one of Claims 1 to 3, in which the purging device comprises an orifice (30) situated downstream of the second pressure regulation means (20), so as to limit the air leakage rate upon the opening of the first pressure regulation means (19).

5. Method for purging a liquid fuel supply device (12) of a gas turbine (1) comprising a combustion chamber (7) capable of being supplied alternately with gaseous and liquid fuel, said device comprising a purging air circuit (17) comprising a manifold (21) capable of distributing the air in the combustion chamber (7), and a first means (19) for regulating the pressure of the air in the purging air circuit (17) and a second pressure regulation means (20) situated between the first regulation means (19) and the manifold (21), **characterized in that** the opening and closing of the first and second regulation means (19, 20) is controlled as a function of the inter-valve pressure measured in the purging air circuit (17) between the first pressure regulation means (19) and the manifold (21), and of the pressure measured in the combustion chamber (7), downstream of an injector (25).

6. Purging method according to Claim 5, **characterized in that** when the liquid fuel supply (12) is closed or being closed, the first regulation means (19) is opened in order to supply the manifold (21) with purging air and an air shut-off valve (23) is opened allowing the air to be distributed from the manifold (21) in the combustion chamber (7).
